# EUROPÄISCHE PATENTSCHRIFT

(11) **EP 4 424 411 B1**
(45) Veröffentlichungstag und Bekanntmachung des Hinweises auf die Patenterteilung: **10.12.2025**
(21) Anmeldenummer: 24182749.2
(22) Anmeldetag: 31.03.2020
(51) Int. Cl.: C01B 3/00, B01J 8/12

(54) **REAKTOR FÜR ENDOTHERME HOCHTEMPERATURREAKTIONEN**
REACTOR FOR HIGH TEMPERATURE ENDOTHERMIC REACTIONS
RÉACTEUR POUR RÉACTIONS ENDOTHERMIQUES À HAUTE TEMPÉRATURE

(30) Priorität: 05.04.2019 DE 102019002523
(43) Veröffentlichungstag der Anmeldung: 04.09.2024
(62) Teilanmeldung aus: 20716701.6
(73) Patentinhaber: BASF SE, 67056 Ludwigshafen am Rhein (DE); thyssenkrupp Uhde GmbH, 44141 Dortmund (DE); thyssenkrupp AG, 45143 Essen (DE)
(72) Erfinder: Bode, Andreas, 1970 Wezembeek Oppem (BE); Wechsung, Achim, 67056 Ludwigshafen am Rhein (DE); Scheiff, Frederik, 67056 Ludwigshafen am Rhein (DE); Flick, Dieter, 67056 Ludwigshafen am Rhein (DE); Kern, Matthias, 67056 Ludwigshafen am Rhein (DE); Kolios, Grigorios, 67056 Ludwigshafen am Rhein (DE); Weikl, Markus, 82049 Pullach (DE); Zander, Hans-Joerg, 81479 München (DE); Antweiler, Nicolai, 45143 Essen (DE); Bueker, Karsten, 45143 Essen (DE); Klingler, Dirk, 68163 Mannheim (DE)
(74) Vertreter: BASF IP Association

(56) Entgegenhaltungen:
- WO-A1-2019/145279
- DE-A1- 102009 004 750
- US-A- 2 982 622

## Beschreibung

Die Erfindung betrifft einen Reaktor für endotherme Hochtemperaturreaktionen, z.B. zur Durchführung einer Dampfreformation eines kohlenwasserstoffhaltigen Einsatzgasstromes (z.B. aufweisend Methan) oder z.B. zum Cracken bzw. thermischen Spalten von Ethan oder z.B. zur Pyrolyse von Erdgas (z.B. aufweisend Methan).

In Öfen bzw. Reaktoren für das Ethancracking oder die Dampfreformation von Methan werden fossile Brennstoffe verbrannt, um thermische Energie zu erzeugen, um z.B. den jeweiligen Einsatzstoffstrom bzw. Prozessgase mittels indirekter Wärmeübertragung zu erhitzen. Dabei entstehen durch die Verbrennung fossiler Brennstoffe unweigerlich CO₂-Emissionen. Die Energieeffizienz wird hierbei in der Regel erhöht, indem Verbrennungsluft vorgeheizt wird, der Einsatz vorgeheizt wird und/oder indem Wärme eines heißen Prozessgases auf Kesselspeisewasser zur Erzeugung von Prozessdampf übertragen wird.

Als Alternative zum etablierten Stand der Technik offenbart die US2,982,622 z.B. ein Verfahren zur Herstellung von Wasserstoff und hochwertigem Koks, bei dem inerte Feststoffteilchen als Schüttgut in Gravitationsrichtung durch eine längliche Reaktionszone geleitet werden, eine elektrische Spannung von 0,1 bis 1000 Volt pro Zoll über mindestens einen Teil der Feststoffmasse in der Reaktionszone angelegt wird, wobei die Spannung ausreicht, um die Temperatur der Feststoffe auf 1800°F bis 3000°F (980°C bis 1650°C) zu erhöhen. Im Gegenstrom wird ein Gasstrom aus Kohlenwasserstoffen, vorzugsweise Erdgas geführt, der über die endotherme Pyrolysereaktion Wasserstoff erzeugt und Kohlenstoff auf den vorgelegten Partikeln ablagert

CH₄ <-> C(s) + 2 H₂.

Durch die Gegenstrombedingung von Feststoff und Gas kann eine Wärmeintegration erreicht werden, wodurch eine hohe Effizienz des Verfahrens ermöglicht wird. Durch die ohmsche, direktelektrische Beheizung kann bei Verwendung von Strom, der mit Hilfe von erneuerbaren Energien erzeugt wurde, die CO₂-Bilanz des Verfahrens der Wasserstoffproduktion durch einen Verzicht auf die fossile Beheizung verbessert werden.

Diesbezüglich wurde jedoch anhand von Untersuchungen festgestellt, dass der aus der Gasphase abgeschiedene Kohlenstoff zu einer Reduktion der Rieselfähigkeit der inerten Feststoffteilchen führt und nach längerem Betrieb zu einer Verblockung des Schüttgutes führt, was die Wirtschaftlichkeit eines solchen Verfahrens deutlich einschränkt.

Hiervon ausgehend liegt der vorliegenden Erfindung die Aufgabe zugrunde, einen verbesserten Reaktor bereitzustellen, der auf eine fossile Beheizung der endothermen Reaktion verzichtet und gleichzeitig einen effizienten Betrieb des Reaktors gestattet.

Diese Aufgabe wird durch einen Reaktor mit den Merkmalen des Anspruchs 1 gelöst.

Vorteilhafte Ausgestaltungen der Erfindung sind in den zugehörigen Unteransprüchen angegeben und werden nachfolgend beschrieben.

Reaktor zur Durchführung einer endothermen Reaktion, insbesondere Hochtemperaturreaktion, bei der aus einem Einsatzgas ein Produktgas gewonnen wird, wobei der Reaktor einen Reaktorinnenraum umgibt, der vorzugsweise in drei Zonen eingeteilt ist, nämlich eine erste Wärmeintegrationszone, eine Reaktionszone und eine zweite Wärmeintegrationszone. Der Reaktor ist dazu konfiguriert, in Gravitationsrichtung ein Bewegtbett zu führen, wobei das Bewegtbett aus einer Vielzahl an Feststoffpartikeln besteht, die am oberen Ende des Reaktor aufgegeben und am unteren Ende des Reaktors abgezogen werden, wobei der Reaktor weiterhin dazu konfiguriert ist, ein Einsatzgas durch die Reaktionszone zu führen, wobei der Reaktor zum Heizen des Einsatzgases dazu ausgebildet ist, die Feststoffpartikel in der Reaktionszone zu heizen (z.B. durch Erzeugung eines elektrischen Stromes in den Feststoffpartikeln, d.h., durch Erzeugung Joulscher Wärme in den Feststoffpartikeln), so dass das Einsatzgas in der Reaktionszone durch Übertragung von Wärme der Feststoffpartikel auf das Einsatzgas auf eine Reaktionstemperatur heizbar ist, um als Edukt an der endothermen Reaktion zur Erzeugung des Produktgases teilzunehmen, und wobei der Reaktorinnenraum weiterhin eine erste Wärmeintegrationszone aufweist, in der Wärme des in der Reaktionszone erzeugten Produktgases auf in die Reaktionszone zu führende Feststoffpartikel des Reaktorbetts übertragbar ist, und wobei weiterhin der Innenraum eine zweite Wärmeintegrationszone aufweist, in der Wärme von aus der Reaktionszone kommenden Feststoffpartikeln des Reaktorbetts zum Vorheizen des Einsatzgases auf das Einsatzgas übertragbar ist.

Gemäß einer Ausführungsform des Reaktors ist vorgesehen, dass der Reaktor zum Heizen der Feststoffpartikel des Bewegtbetts eine erste und eine zweite Elektrode aufweist, wobei insbesondere die erste Elektrode oberhalb der zweiten Elektrode im Innenraum angeordnet ist, und wobei insbesondere die beiden Elektroden für die Feststoffpartikel, das Einsatzgas und das Produktgas jeweils durchlässig sind. D.h., dass die beiden Elektroden so angeordnet bzw. ausgestaltet sind, dass die Fließfähigkeit der Feststoffpartikel nicht beeinträchtigt wird und die Feststoffpartikel, das Einsatzgas sowie das Produktgas die Elektroden im Reaktorinnenraum passieren können.

Gemäß einer Ausführungsform des Reaktors kann die erste und/oder die zweite Elektrode eine oder mehrere Streben aufweisen, die sich durch den Reaktorinnenraum erstrecken.

Weiterhin ist gemäß einer Ausführungsform vorgesehen, dass die erste Elektrode ein Gitter aufweist oder durch ein Gitter gebildet ist. Weiterhin kann auch die zweite Elektrode ein Gitter aufweisen oder durch ein Gitter gebildet sein.

Weiterhin ist gemäß einer Ausführungsform der Erfindung vorgesehen, dass die erste und/oder die zweite Elektrode (bzw. die jeweilige Strebe oder das Gitter der ersten und/oder der zweiten Elektrode) eines der folgenden Materialien aufweist oder aus einem der folgenden Materialien besteht: ein hochtemperaturbeständiger Stahl, eine Stahllegierung aufweisend Ni (z.B. Centralloy G 4852 Micro R), eine Nickelbasislegierung, Siliziumkarbid, Molybdändisilicid, Graphit.

Grundsätzlich werden Materialien bevorzugt, die sich durch eine Hochtemperaturbeständigkeit (chemische und mechanische Stabilität bei hohen Temperaturen) und eine möglichst hohe elektrische Leitfähigkeit auszeichnen. Im Falle von Graphit kann die chemische Stabilität bei Anwesenheit von Dampf und hohen Temperaturen beispielsweise durch eine Schutzbeschichtung verbessert werden.

Ebenfalls ist gemäß einer Ausführungsform vorgesehen, dass die Elektroden, eine elektrische Zufuhr zu den Elektroden, sowie das Bewegtbett zum Druckmantel des Reaktors hin elektrisch isoliert sind. Dies wird z. B. durch eine elektrisch schwach-leitfähige Hochtemperaturausmauerung, beispielsweise aus Al₂O₃ oder ZrO₂ erreicht.

Weiterhin ist gemäß einer Ausführungsform der Erfindung vorgesehen, dass der Reaktor dazu konfiguriert ist, zum Heizen der Feststoffpartikel eine Gleichspannung zwischen den beiden Elektroden bereitzustellen bzw. anzulegen.

Weiterhin ist gemäß einer Ausführungsform des Reaktors vorgesehen, dass der Reaktor einen Feststoffpartikeleinlass aufweist, über den Feststoffpartikel in die erste Wärmeintegrationszone einleitbar sind, so dass die Feststoffpartikel an der ersten Elektrode vorbei in die Reaktionszone führbar sind und weiterhin an der zweiten Elektrode vorbei in die zweite Wärmeintegrationszone führbar sind.

Weiterhin ist gemäß einer Ausführungsform des Reaktors vorgesehen, dass der Reaktor einen Feststoffpartikelauslass aufweist, über den die Feststoffpartikel aus der zweiten Wärmeintegrationszone abziehbar sind, beispielweise eine Zellradschleuse. Diese ist das maßgebliche Steuerungselement für die Wandergeschwindigkeit bzw. den Massenstrom des Bewegtbetts.

Weiterhin ist gemäß einer Ausführungsform des Reaktors vorgesehen, dass der Reaktor einen Einsatzgaseinlass aufweist, über den das Einsatzgas in die zweite Wärmeintegrationszone einleitbar und von dort an der zweiten Elektrode vorbei in die Reaktionszone einleitbar ist.

Weiterhin ist gemäß einer Ausführungsform des Reaktors vorgesehen, dass der Reaktor einen Produktgasauslass aufweist, über den in der Reaktionszone erzeugtes Produktgas aus der ersten Wärmeintegrationszone abziehbar ist.

Weiterhin ist gemäß einer Ausführungsform des Reaktors vorgesehen, dass der Reaktor dazu konfiguriert ist, die Feststoffpartikel in der ersten und/oder der zweiten Wärmeintegrationszone schwerkraftangetrieben in Form eines Bewegtbetts zu führen.

Gemäß einer weiteren Ausführungsform des Reaktors ist vorgesehen, dass der Reaktor dazu konfiguriert ist, die Feststoffpartikel in der Reaktionszone schwerkraftgetrieben in Form eines Bewegtbetts zu führen.

Weiterhin ist gemäß einer Ausführungsform des Reaktors vorgesehen, dass die Reaktionszone des Reaktors durch einen umlaufende Wandungsabschnitt des Reaktors begrenzt ist, der eine der Reaktionszone zugewandte Innenseite aufweist, die konusförmig ausgebildet ist, so dass sich die Reaktionszone in vertikaler Richtung nach oben hin verjüngt. Gemäß einer Ausführungsform kann dabei die Innenseite einen Winkel mit einem horizontalen Querschnitt der Reaktionszone bilden, wobei der Winkel vorzugsweise in einem Bereich von 85° bis 89,5°, bevorzugt 87° bis 89°, liegt.

Ein weiterer Aspekt der vorliegenden Erfindung betrifft ein Verfahren zur Durchführung einer endothermen Reaktion zur Gewinnung eines Produktgases aus einem Einsatzgas unter Verwendung eines erfindungsgemäßen Reaktors, wobei
- eine Vielzahl an Feststoffpartikeln in die erste Wärmeintegrationszone und von dort in die Reaktionszone geführt werden,
- die Feststoffpartikel in der Reaktionszone erhitzt werden,
- die Feststoffpartikel aus der Reaktionszone in die zweite Wärmeintegrationszone geführt werden und aus der zweiten Wärmeintegrationszone abgezogen werden,
- das Einsatzgas in die zweite Wärmeintegrationszone und von dort in die Reaktionszone eingeleitet wird, wobei das Einsatzgas in der zweiten Wärmeintegrationszone gegen aus der Reaktionszone kommende Feststoffpartikel erhitzt wird, wobei die Feststoffpartikel abgekühlt werden, und wobei das Einsatzgas in der Reaktionszone mit den erhitzten Feststoffpartikeln kontaktiert wird, wobei Wärme der erhitzten Feststoffpartikel zum Erhitzen des Einsatzgases in der Reaktionszone auf das Einsatzgas übertragen wird, wobei das Einsatzgas in der Reaktionszone als ein Edukt an der Reaktion unter Erzeugung des Produktgases teilnimmt,
- das erzeugte Produktgas aus der Reaktionszone in die erste Wärmeintegrationszone geführt wird, wobei die Feststoffpartikel in der ersten Wärmeintegrationszone gegen das aus der Reaktionszone kommende Produktgas vorgeheizt werden, wobei das Produktgas abgekühlt wird, und wobei
- das Produktgas aus der ersten Wärmeintegrationszone abgezogen wird.

Bevorzugt werden die Feststoffpartikel bei dem Verfahren gemäß einer Ausführungsform im Kreislauf geführt. D.h. insbesondere, dass die aus der zweiten Wärmeintegrationszone abgezogenen Feststoffpartikel (ggf. nach einer Zwischenbehandlung der Feststoffpartikel) wieder in die erste Wärmeintegrationszone eingeleitet werden.

Gemäß einer weiteren Ausführungsform des Verfahrens handelt es sich bei dem Einsatzgas um Ethan (C₂H₆) zusammen mit Wasserdampf (H₂O), das in der Reaktionszone bei vorzugsweise bei Temperaturen von etwa 850°C bis 1250°C und Drücken von 1-5 bar(a) zu Ethen (C₂H₄) und Wasserstoff (H₂) als Produktgas umgesetzt wird, wobei als Feststoffpartikel Keramikkugeln, beispielsweise aus Korund (Al₂O₃), verwendet werden.

Gemäß einer weiteren Ausführungsform des Verfahrens handelt es sich bei der endothermen Reaktion um eine Dampfreformierung:

CH₄+H₂O -> CO + 3H₂,

wobei als Einsatzgas Methan (CH₄) zusammen mit Wasserdampf (H₂O) in der Reaktionszone (vorzugsweise bei Temperaturen von etwa 950°C bis 1250°C und Drücken von 10 bar(a) bis 100 bar(a) (vorzugsweise bei Drücken von 15bar(a) bis 50 bar(a)) zu Kohlenmonoxid und Wasserstoff als Produktgas umgesetzt wird, wobei wiederum als Feststoffpartikel bevorzugt Keramikkugeln, beispielsweise aus Korund (Al₂O₃), verwendet werden oder alternativ ein abriebsbeständiger Katalysator auf Ni-Basis.

Weiterhin kann es sich bei der Reaktion gemäß einer Ausführungsform auch um eine reverse Wassergas-Shift-Reaktion handeln:

CO₂+H₂ -> CO + H₂O,

bei der CO₂ und H₂ als Einsatz zu CO und H₂O umgesetzt werden, wobei wiederum als Feststoffpartikel Keramikkugeln, beispielsweise aus Korund (Al₂O₃), verwendet werden oder alternativ ein abriebsbeständiger Katalysator auf Ni-Basis.

Grundsätzlich kann es sich bei der Reaktion auch um eine Dampfspaltung handeln, bei der Naphtha als Einsatz verwendet wird.

Weiterhin kann es sich bei der Reaktion gemäß einer Ausführungsform um eine Propan-Dehydrierung zu Propen handeln (C₃H₈ -> C₃H₆ + H₂), wobei Propan als Einsatz verwendet wird und die Feststoffpartikel des Reaktorbetts einen für die Reaktion geeigneten Katalysator bilden. Der Katalysator erfordert im Vergleich zu einem Rohrfestbettreaktor eine erhöhte Abriebfestigkeit, kann aber mit Vorteil einer externen Katalysatorregeneration unterzogen werden, falls durch die Reaktion eine Verkokung auftritt.

Weiterhin kann es sich bei der Reaktion gemäß einer Ausführungsform auch um eine Butan-Dehydrierung zu Buten handeln (C₄H₁₀ -> C₄H₈ + H₂), wobei Butan als Einsatz verwendet wird und wiederum die Feststoffpartikel des Reaktorbetts einen für die Reaktion geeigneten Katalysator bilden.

Weiterhin kann es sich bei der Reaktion gemäß einer Ausführungsform auch um eine Buten-Dehydrierung zu Butadien handeln (C₄H₈ -> C₄H₆ + H₂), wobei Buten als Einsatz verwendet wird und wiederum die Feststoffpartikel des Reaktorbetts einen für die Reaktion geeigneten Katalysator bilden.

Weiterhin kann es sich bei der Reaktion gemäß einer Ausführungsform auch um eine Ethylbenzen-Dehydrierung zu Styrol handeln (C₈H₁₀ -> C₈H₈ + H₂), wobei Ethylbenzen als Einsatz verwendet wird und wiederum die Feststoffpartikel des Reaktorbetts einen für die Reaktion geeigneten Katalysator bilden.

Weitere Merkmale und Vorteile der vorliegenden Erfindung sollen bei der Beschreibung von Ausführungsbeispielen anhand der Figuren erläutert werden. Es zeigen:
- Fig. 1: eine schematische Darstellung einer Ausführungsform eines erfindungsgemäßen Reaktors bzw. eines erfindungsgemäßen Verfahrens;
- Fig. 2: eine schematische Darstellung einer weiteren Ausführungsform eines erfindungsgemäßen Verfahrens; und
- Fig. 3: eine schematische Darstellung einer Ausführungsform einer Reaktionszone eines erfindungsgemäßen Reaktors bzw. eines erfindungsgemäßen Verfahrens.

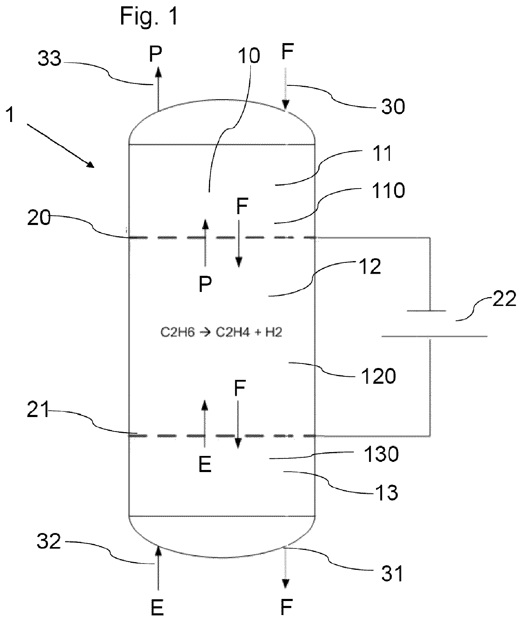

Die vorliegende Erfindung betrifft einen Reaktor 1 zur Durchführung einer endothermen Reaktion, wie er in den Figuren 1 bis 3 in unterschiedlichen Ausführungsformen bzw. Anwendungen gezeigt ist.

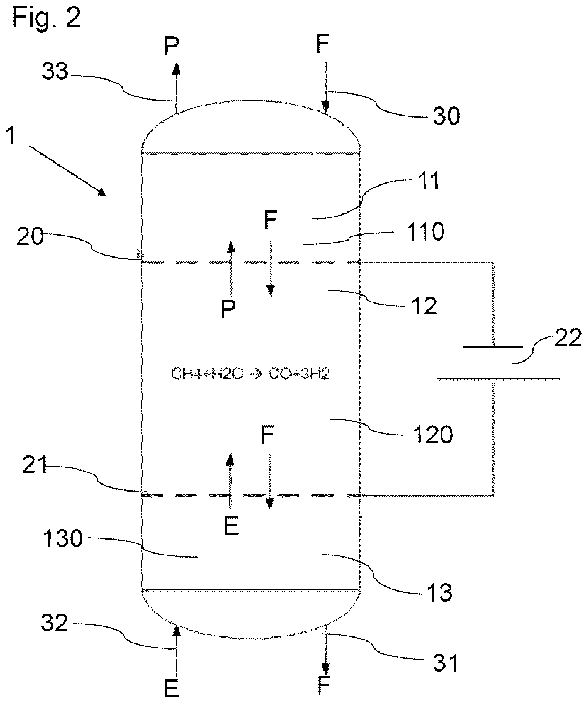

Der Reaktor 1 ist zur Durchführung einer endothermen Reaktion ausgebildet, bei der aus einem Einsatzgas E ein Produktgas P gewonnen wird. Fig. 1 zeigt diesbezüglich eine Variante, bei der Ethan als Einsatzgas E zu Ethen (C₂H₄) und Wasserstoff (H₂) als Produktgas P umgesetzt wird. Der Reaktor kann alternativ z.B. gemäß Figur 2 auch zur Dampfreformierung verwendet werden, wobei als Einsatzgas Methan (CH₄) zusammen mit Wasserdampf (H₂O) zu Kohlenmonoxid und Wasserstoff als Produktgas P bzw. Synthesegas umgesetzt wird. Andere Reaktionen sind ebenfalls denkbar.

Der Reaktor 1 umgibt gemäß den Figuren 1 bis 3 jeweils einen Reaktorinnenraum 10, wobei der Reaktor 1 dazu konfiguriert ist, in einer Reaktionszone 12 des Reaktorinnenraumes 10 ein Reaktorbett 120 aufweisend eine Vielzahl an Feststoffpartikeln F bereitzustellen, wobei der Reaktor 1 weiterhin dazu konfiguriert ist, das Einsatzgas E in die Reaktionszone 12 zu führen, wobei der Reaktor 1 zum Heizen des Einsatzgases E dazu ausgebildet ist, die Feststoffpartikel F in der Reaktionszone 12 zu heizen, so dass das Einsatzgas E in der Reaktionszone 12 durch Übertragung von Wärme der Feststoffpartikel F auf das Einsatzgas E auf eine Reaktionstemperatur heizbar ist, um als Edukt an der jeweiligen endothermen Reaktion zur Erzeugung des Produktgases P teilzunehmen, und wobei der Reaktorinnenraum 10 weiterhin eine erste Wärmeintegrationszone 11 aufweist, in der Wärme des in der Reaktionszone 12 erzeugten Produktgases P auf in die Reaktionszone 12 zu führende Feststoffpartikel F des Reaktorbetts 120 übertragbar ist, und wobei weiterhin der Reaktorinnenraum 10 eine zweite Wärmeintegrationszone 13 aufweist, in der Wärme von aus der Reaktionszone 12 kommenden Feststoffpartikeln F des Reaktorbetts 120 zum Vorheizen des Einsatzgases E auf das Einsatzgas E übertragbar ist.

Bei den in den Figuren 1 und 2 gezeigten Ausführungsformen des Reaktors 1 handelt es sich bei dem Reaktorbett 120 in der Reaktionszone 12 sowie bei den Reaktorbetten 110, 130 in den Wärmeintegrationszonen um durch Schwerkraft angetriebene Feststoffpartikel F, wobei das Einsatzgas E einen Gegenstrom-Gasstrom bildet, so dass vorzugsweise eine nahezu vollständige Wärmeintegration erzielbar ist.

Das Aufheizen und Abkühlen von Gasen erfolgt dabei gemäß einer Ausführungsform auf einer Zeitskala von 0,1 s bis 1 s, was für die Reaktionsführung von Vorteil ist, wenn z.B. ein schnelles Abkühlen auf eine niedrigere Temperatur des Produktgases erforderlich ist.

Wie anhand der Figuren 1 und 2 ersichtlich ist, wird zum Heizen des Einsatzgases E eine direkte elektrische (oder induktive) Erwärmung der Feststoffpartikel F verwendet. Hierzu können entsprechend durchlässige Elektroden 20, 21, insbesondere in Form von Gittern 20, 21, verwendet werden, wobei eine elektrische Spannung 22 an die Elektroden 20, 21 angelegt wird und damit der Widerstand der Feststoffpartikel F (hauptsächlich Festkörper gegen Festkörper-Kontaktwiderstände anstelle von Materialwiderständen) für die Wärmeproduktion/Wärmeabgabe genutzt wird.

Um eine optimale Wärmeintegration zu erreichen, werden gemäß einer bevorzugten Ausführungsform die Wärmekapazitätsströme der Gas- und Feststoffpartikelströme E, P, F aneinander angepasst. Dies führt zu so genannten Wärmeintegrationszonen 11, 13 im Reaktorinnenraum 10 bzw. Bewegtbett,110, 130, in denen das Einsatzgas E durch heiße Feststoffpartikel F aus der Reaktionszone 12 (untere zweite Wärmeintegrationszone 13) vorgewärmt wird und heißes Produktgas P kalte Feststoffpartikel F erwärmt, die an der Oberseite des Reaktors 1 eingebracht werden.

Gemäß den Figuren 1 und 2 ist hierbei bevorzugt vorgesehen, dass die Reaktionszone 12 bei bestimmungsgemäß angeordnetem Reaktor 1 in vertikaler Richtung zwischen den beiden Elektroden 20, 21 angeordnet ist, wobei die erste Wärmeintegrationszone 11 oberhalb der ersten Elektrode 20 angeordnet ist, und wobei die zweite Wärmeintegrationszone 21 unterhalb der zweiten Elektrode angeordnet ist.

Zum Einleiten der das jeweilige Reaktorbett 110, 120, 130 bildenden Feststoffpartikel F ist weiterhin vorgesehen, dass der jeweilige Reaktor 1 einen Feststoffpartikeleinlass 30 aufweist, über den Feststoffpartikel F in die erste Wärmeintegrationszone 11 einleitbar sind, so dass die Feststoffpartikel F an der ersten Elektrode 20 vorbei in die Reaktionszone 12 führbar sind und weiterhin an der zweiten Elektrode 21 vorbei in die zweite Wärmeintegrationszone 13 führbar sind.

Zum Abziehen der Feststoffpartikel F (und insbesondere zum Rezirkulieren der Feststoffpartikel F zum Feststoffpartikeleinlass 30) weist der Reaktor 1 weiterhin einen Feststoffpartikelauslass 31 auf, über den die Feststoffpartikel F aus der zweiten Wärmeintegrationszone 13 abziehbar sind.

Weiterhin weist insbesondere der jeweilige Reaktor 1 zum Einleiten des Einsatzgases E in den Reaktorinnenraum 10 einen Einsatzgaseinlass 32, über den das Einsatzgas E in die zweite Wärmeintegrationszone 13 einleitbar und von dort an der zweiten Elektrode 21 vorbei in die Reaktionszone 12 führbar ist.

Zum Abziehen des Produktgases P weist der jeweilige Reaktor 1 schließlich einen Produktgasauslass 33 auf, über den in der Reaktionszone 12 erzeugtes Produktgas P aus der ersten Wärmeintegrationszone 11 abziehbar ist.

Gemäß einem Beispiel der Erfindung kann gemäß Figur 1 bei der Erzeugung von Ethylen zumindest 90% der eingesetzten Wärme zurückgewonnen werden, wobei zur Berechnung von Feststoffpartikeln F aus Kohlenstoff ausgegangen wird. Anstelle von Kohlenstoff werden jedoch bevorzugt keramische Materialien verwendet. Insbesondere können Feststoffpartikel F aus z. B. Al₂O₃ bei der vorliegenden Erfindung als Bestandteil des Reaktorbetts verwendet werden.

Zum Erzielen der vorgenannten Wärmerückgewinnung kann das Einsatzgas (Ethan) E mit einer Temperatur von z.B. 150°C und einem Druck von z.B. 2 bar bei einem Massenstrom von z.B. 1000 kg/h in den Reaktor 1 eingeleitet werden. Das Einsatzgas E kann dabei mit Dampf verdünnt werden, der eine Temperatur von z.B. 155°C bei einem Druck von z.B. 2 bar und einem Massenstrom von z.B. 300 kg/h aufweist. Die Umsetzung von Ethan zu Ethylen kann in der Reaktionszone bei einer Temperatur von z.B. 850°C vorgenommen werden, wobei das Ethylenprodukt z.B. mit einer Temperatur von 150°C bei einem Druck von z.B. 2 bar und einem Massenstrom von z.B. 606 kg/h aus dem Reaktor 1 abgezogen werden kann. Die Feststoffpartikel F können des Weiteren bei einer Temperatur von z.B. 174°C und einem Druck von z.B. 2 bar und einem Massenstrom von 2.9 t/h in den Reaktor 1 eingeleitet werden und bei einer Temperatur von 280°C aus dem Reaktor 1 abgezogen werden.

Bei gegebener Konvertierung von 65% des Einsatzes Ethan zu Ethylen (bei einer Dampfverdünnung des Einsatzes mit 30% Wasserdampf) beträgt die Heizleistung 1550 kWh/t Ethylenprodukt. Bei 90% Umwandlungswirkungsgrad elektrischer Energie beträgt der elektrische Verbrauch 1722 kWh/t Ethylenprodukt.

Ähnlich wie bei der Ethanspaltung kann der erfindungsgemäße Reaktor 1 bzw. das erfindungsgemäße Verfahren gemäß Figur 2 auch zur Dampfmethanreformierung realisiert werden. Anstelle von inerten Partikeln kann auch ein Katalysator als Feststoffmedium bzw. Feststoffpartikel F im Bewegtbett 110, 120, 130 eingesetzt. Der Katalysator erfordert im Vergleich zu einem Rohrfestbettreaktor eine erhöhte Abriebfestigkeit, kann aber mit Vorteil einer externen Katalysatorregeneration unterzogen werden. Die Entscheidung, ob inerte Partikel oder die Reaktion beeinflussende Partikel verwendet werden sollen, kann insbesondere auf Basis der Reaktionstemperatur getroffen werden. Am Beispiel der Dampfreformierung kann z.B. im unteren Temperaturbereich (bei ca. 950°C) ein Katalysatormaterial eingesetzt werden, während im oberen Temperaturbereich (bei ca. 1250°C) die Reaktionen hinreichend schnell ablaufen und ein inertes Material verwendet werden kann.

Gemäß einer Ausführungsform ist der Reaktor dazu ausgebildet, die Feststoffpartikel mit einer definierten Geschwindigkeit durch die Reaktionszone 12 oder die Wärmeintegrationszonen 11, 13 zu führen, wobei vorzugsweise diese Geschwindigkeit der Feststoffpartikel F (z.B. bei den Ausführungsformen gemäß Figuren 1 und 2) im Bereich von 0,1m/h bis 2 m/h liegt, was eine langsame und sehr materialfreundliche Geschwindigkeit darstellt, bei der das Risiko von reibungsbedingten Schäden des Reaktors entsprechend geringer ist.

Die direkte elektrische Erwärmung mittels der Elektroden 20, 21 bei ~800°C bis -1250°C eines Kohlenstoff-Bewegtbetts 120 ist bei elektrischen Widerständen im Bereich von ~1,0 Ohm bis 10 Ohm möglich. Hierzu können z.B. Feststoffpartikel F in Form von Kohlenstoffpartikeln mit einem spezifischen Bettwiderstand von ~0,005-0,04[Ohm*m] bei Temperaturen im Bereich oberhalb von 800°C verwendet werden.

Die Feststoffpartikel F des Bewegtbetts 110, 120, 130 sollten unter den Reaktionsbedingungen ausreichend chemisch stabil sein, so dass keramische Materialien gegenüber Kohlenstoff bevorzugt sind, falls im Eduktgas Dampf oder größere Mengen CO₂ enthalten sind. Das jeweilige Feststoffmedium F kann je nach Prozessanforderung ausgewählt werden. Im Prinzip sind niederohmige Materialien, z.B. keramische Materialien, vorteilhaft, wobei die elektrische Leitfähigkeit vorzugsweise höher sein sollte als die des feuerfesten Ausmauerungsmaterials des Reaktors 1, so dass primär eine Erwärmung des Reaktorbetts 120 und nicht des umgebenden feuerfesten Materials des Reaktors stattfindet. Bei Verwendung von Materialien mit relativ hoher Leitfähigkeit ist vor allem der Übergangswiderstand zwischen den einzelnen Feststoffpartikeln F für den Gesamtwiderstand maßgeblich. Die Oberflächenmorphologie kann daher so abgestimmt werden, dass sie einen erhöhten elektrischen Widerstand bedingt. Gemäß einer Ausführungsform sind die Feststoffpartikel z.B. nicht-sphärische Partikel.

Die Länge der Reaktionszone 12 in vertikaler Richtung bzw. in Strömungsrichtung der Feststoffpartikel F und des Einsatzgasstroms E definiert die Verweilzeit des Gases in der erwärmten Zone 12. Je größer die Länge, desto günstiger sind die Bedingungen für die elektrische Beheizung, da sich ein entsprechend hoher elektrischer Gesamtwiderstand ergibt (Serien-Kontaktwiderstände der Partikel F). Verweildauern von unter 1 s in der Reaktionszone 12 sind möglich, was für die Ethylenproduktion durch Ethan-Dehydrierung vorteilhaft ist.

Weiterhin kann die Partikelgröße der Feststoffpartikel F je nach Reaktoranforderung gewählt werden. So ist z.B. für die Ethan-Dehydrierung eine schnelle Erhitzung von Vorteil, bei der Partikelgrößen im Bereich von maximal 5 mm für eine effiziente direkte Wärmeübertragung zwischen der Gas- und Feststoffphase. Niedrige Aufheizzeiten von 0,1 s bis 1 s sind so problemlos möglich.

Weiterhin erweist sich gemäß einer Ausführungsform auch eine monomodale Partikelgrößenverteilung der Feststoffpartikel F als vorteilhaft, da diese zu einer homogenen Erwärmung und näherungsweise zu einer Pfropfenströmung führt, ohne Entmischung durch teilweise Fluidisierung.

Die Auswahl des Elektrodenmaterials der Elektroden 20, 21 basiert insbesondere auf folgenden Kriterien, wonach ein stabiles Material unter den Reaktionsbedingungen (Temperatur, Gasbedingungen, feste Fließbettmaterialien) bevorzugt ist, das eine vergleichsweise hohe elektrische Leitfähigkeit im Vergleich zum Bettmedium aufweist, um eine Erwärmung im Bett und nicht in der Elektrode zu gewährleisten, wobei das Material weiterhin eine Herstellbarkeit in der für die gesamte Elektrode erforderlichen Form erlauben sollte. Im einfachsten Fall ist die jeweilige Elektrode 20 z.B. als eine einzelne oder als mehrere Streben ausgebildet, kann jedoch auch eine komplexere Gittergestalt aufweisen. Für die oben genannten Prozesse können als Elektrodenmaterial Edelstähle oder Ni-Basislegierungen (aufgrund von hohen Temperaturen) in Frage kommen. So ist z.B. das Material Centralloy^{®} G 4852 Micro R unter Reformerbedingungen stabil, weist eine akzeptable Festigkeit auf und kann als Elektrodenmaterial verwendet werden. Wenn kein Dampf (keine Dampfverdünnung) oder CO₂ im Einsatz- oder Produktgas E, P vorhanden ist, kann prinzipiell auch Graphit als Elektrodenmaterial verwendet werden. Alternativ kann Graphit mit einer chemisch stabilen Schutzschicht überzogen werden, die allerdings elektrisch leitend gestaltet sein muss.

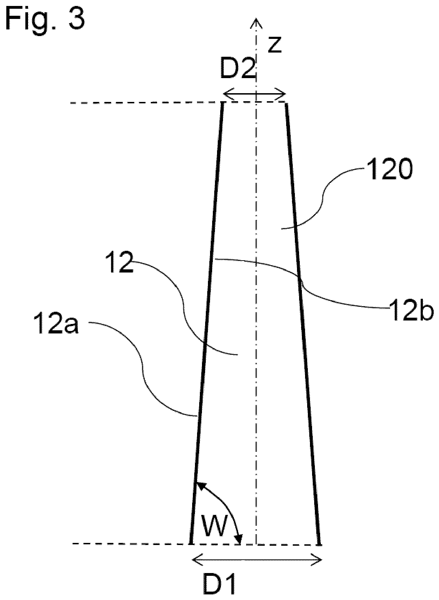

Weiterhin kann gemäß einer in der Fig. 3 gezeigten Ausführungsform vorgesehen sein, dass die Reaktionszone 12 des Reaktors 1 durch einen umlaufenden Wandungsabschnitt 12a des Reaktors 1 begrenzt ist, der eine der Reaktionszone 12 zugewandte Innenseite 12b aufweist, die konusförmig ausgebildet ist, so dass sich die Reaktionszone 12 in vertikaler Richtung z nach oben hin verjüngt. Hierbei verringert sich der Durchmesser D1 der Reaktionszone 12 auf den Durchmesser D2 der Reaktionszone 12.

Die Innenseite 12b bildet dabei insbesondere eine Mantelfläche eines Kegelstumpfes. Mit anderen Worten formt die Reaktionszone 12 in diesem Bereich insbesondere einen Kegelstumpf.

Eine derartig sich konisch erweiternde Geometrie der Reaktionszone 12 führt mit Vorteil zu einer lateralen Bewegung von Feststoffpartikeln F des Bewegtbetts 120 in der Reaktionszone 12. Im Falle von Ablagerungen von Kohlenstoff aus dem Einsatzgas auf den Feststoffpartikeln F, z.B. bei einer Pyrolysereaktion bei der reinen Methanpyrolyse (dampffrei) oder bei einer Verkokung bei der Dampfreformierung bei Verwendung kleiner Verhältnisse von Dampf zu Kohlenstoff (auch als S/C bezeichnet), z. B. S/C< 1, 8, insbesondere S/C<1, oder bei einer Coking-Reaktion beim Ethancracken, kann eine Brückenbildung erfolgen, die durch die laterale Bewegung der Partikel F wieder aufgebrochen wird und dadurch nicht zu einer Verblockung führt.

Die Innenseite 12b bildet vorzugsweise einen Winkel W mit einer horizontalen Ebene bzw. einem horizontalen Querschnitt der Reaktionszone 12, der relativ nahe an 90° liegen kann.

Vorzugsweise liegt der Winkel W in einem Bereich von 85° bis 89,5°, bevorzugt in dem Bereich 87° bis 89°.

Grundsätzlich kann der erfindungsgemäße Reaktor für jede andere endotherme Reaktion verwendet werden, wobei vorzugsweise keine erhöhte Feststoffproduktion in der Reaktionszone 12 erfolgen sollte. In dieser Hinsicht erweist sich z. B: bei der Methanpyrolyse (CH₄ -> C + 2H₂) eine Blockade des beweglichen Bettes 120 und die entsprechende Widerstandsänderung des Bettes als nachteilig.

Weiterhin kann zum Direktheizen der Partikel F mittels der Elektroden 20, 21 auch eine Wechselspannung anstelle einer Gleichspannung 22 an die Widerstandsheizung angelegt werden.

Die vorliegende Erfindung ermöglicht mit Vorteil aufgrund der spezifischen Heizung der Partikel F eine reduzierte direkte Emission von CO₂ aus dem Prozess. Weiterhin ist durch die Wärmeintegration zwischen Produkten und Edukten im Reaktor selber keine oder lediglich eine reduzierte externe Ausrüstung zur Wärmerückgewinnung notwendig.

Die Erfindung erlaubt vergleichsweise kurze Aufheiz- und Abkühlzeiten, was zu einer guten Reaktionskontrolle führt. Dies ist insbesondere vorteilhaft, da ein schnelles Abkühlen des aus der Reaktionszone austretenden Gases beim Steamcracken nötig ist, um die Ausbeute an Zielprodukt zu steigern.

Die Dampfproduktion kann mit Vorteil reduziert werden. Weiterhin sind bei der Ethanspaltung keine Entkokungszyklen notwendig, da auf Partikeln aufgetragener Koks aus dem Prozess entfernt werden kann. Somit kann das Entkoken mit Vorteil außerhalb des Reaktors, beispielweise durch Abbrennen an vorgewärmter Luft, erfolgen.

**Bezugszeichenliste**

| | |
|---|---|
| 1 | Reaktor |
| 10 | Reaktorinnenraum |
| 11 | Erste Wärmeintegrationszone |
| 12 | Reaktionszone |
| 12a | Wandungsabschnitt |
| 12b | Innenseite |
| 13 | Zweite Wärmeintegrationszone |
| 20 | Erste Elektrode |
| 21 | Zweite Elektrode |
| 22 | Elektrische Spannung bzw. Spannungsquelle |
| 30 | Feststoffpartikeleinlass |
| 31 | Feststoffpartikelauslass |
| 32 | Einsatzgaseinlass |
| 33 | Einsatzgasauslass |
| 110, 130 | Bewegtbett |
| 120 | Bewegtbett |
| 330 | Strömungsverbindung |
| F | Feststoffpartikel (Reaktorbett) |
| E | Einsatzgas |
| P | Produktgas |
| W | Winkel |

## Patentansprüche

1. Reaktor (1) zur Durchführung einer endothermen Reaktion, insbesondere Hochtemperaturreaktion, bei der aus einem Einsatzgas (E) ein Produktgas (P) gewonnen wird, wobei der Reaktor (1) einen Reaktorinnenraum (10) umgibt, wobei der Reaktor (1) dazu konfiguriert ist, in einer Reaktionszone (12) des Reaktorinnenraumes (10) ein schwerkraftgetriebenes Bewegtbett (120) aufweisend eine Vielzahl an Feststoffpartikeln (F) bereitzustellen, so dass der Reaktor (1) einen Feststoffpartikeleinlass (30) aufweist, über den Feststoffpartikel (F) in eine erste Wärmeintegrationszone (11) einleitbar sind, und der Reaktor (1) einen Feststoffpartikelauslass (31) mit einem Steuerungselement für die Wandergeschwindigkeit aufweist, über den die Feststoffpartikel (F) aus einer zweiten Wärmeintegrationszone (13) abziehbar sind, wobei der Reaktor (1) weiterhin dazu konfiguriert ist, das Einsatzgas (E) in die Reaktionszone (12) zu führen, so dass das Einsatzgas (E) einen Gegenstrom-Gasstrom bildet, wobei der Reaktor (1) zum Heizen des Einsatzgases (E) dazu ausgebildet ist, die Feststoffpartikel (F) in der Reaktionszone (12) durch Erzeugung eines elektrischen Stromes in den Feststoffpartikeln zu heizen, so dass der Reaktor (1) zum Heizen der Feststoffpartikel (F) des Reaktorbetts (120) eine erste und eine zweite Elektrode (20, 21) aufweist, wobei die erste Elektrode (20) oberhalb der zweiten Elektrode (21) im Reaktorinnenraum (10) angeordnet ist, so dass das Einsatzgas (E) in der Reaktionszone (12) durch Übertragung von Wärme der Feststoffpartikel (F) auf das Einsatzgas (E) auf eine Reaktionstemperatur heizbar ist, um als Edukt an der endothermen Reaktion zur Erzeugung des Produktgases (P) teilzunehmen, und wobei der Reaktorinnenraum (10) weiterhin eine erste Wärmeintegrationszone (11) aufweist, in der Wärme des in der Reaktionszone (12) erzeugten Produktgases (P) auf in die Reaktionszone (12) zu führende Feststoffpartikel (F) des Reaktorbetts (120) übertragbar ist, und wobei weiterhin der Reaktorinnenraum (10) eine zweite Wärmeintegrationszone (13) aufweist, in der Wärme von aus der Reaktionszone (12) kommenden Feststoffpartikeln (F) des Reaktorbetts (120) zum Vorheizen des Einsatzgases (E) auf das Einsatzgas (E) übertragbar ist, so dass die Reaktionszone (12) zwischen den beiden Elektroden (20, 21) angeordnet ist, wobei die erste Wärmeintegrationszone (11) oberhalb der ersten Elektrode (20) angeordnet ist, und wobei die zweite Wärmeintegrationszone (13) unterhalb der zweiten Elektrode angeordnet ist.

2. Reaktor nach Anspruch 1, **dadurch gekennzeichnet, dass** die beiden Elektroden (20, 21) für die Feststoffpartikel (F), das Einsatzgas (E) und das Produktgas (P) jeweils durchlässig sind.

3. Reaktor nach Anspruch 1 oder 2, **dadurch gekennzeichnet, dass** der Reaktor (1) dazu konfiguriert ist, zum Heizen der Feststoffpartikel (F) eine Gleichspannung (22) oder eine Wechselspannung (22) zwischen den beiden Elektroden (20, 21) bereitzustellen.

4. Reaktor nach einem der vorhergehenden Ansprüche, **dadurch gekennzeichnet, dass** der Reaktor (1) einen Feststoffpartikeleinass (30) aufweist, über den Feststoffpartikel (F) in die erste Wärmeintegrationszone (11) einleitbar sind, so dass die Feststoffpartikel (F) an der ersten Elektrode (20) vorbei in die Reaktionszone (12) führbar sind und weiterhin an der zweiten Elektrode (21) vorbei in die zweite Wärmeintegrationszone (13) führbar sind und die Feststoffpartikel am oberen Ende des Reaktors aufgegeben und am unteren Ende des Reaktors abgezogen werden.

5. Reaktor nach einem der vorhergehenden Ansprüche, **dadurch gekennzeichnet, dass** das Steuerungselement für die Wandergeschwindigkeit eine Zellradschleuse ist.

6. Reaktor nach einem der vorhergehenden Ansprüche, **dadurch gekennzeichnet, dass** der Reaktor (1) einen Einsatzgaseinlass (32) aufweist, über den das Einsatzgas (E) in die zweite Wärmeintegrationszone (13) einleitbar und von dort an der zweiten Elektrode (21) vorbei in die Reaktionszone (12) führbar ist und der Reaktor einen Produktgasauslass (33) aufweist, über den in der Reaktionszone (12) erzeugtes Produktgas (P) aus der ersten Wärmeintegrationszone (11) abziehbar ist.

7. Reaktor nach einem der vorhergehenden Ansprüche, **dadurch gekennzeichnet, dass** der Reaktor (1) dazu konfiguriert ist, die Feststoffpartikel (F) in der ersten und/oder der zweiten Wärmeintegrationszone (11, 13) schwerkraftangetrieben in Form eines Bewegtbetts (110, 130) zu führen.

8. Reaktor nach einem der vorhergehenden Ansprüche, **dadurch gekennzeichnet, dass** die Reaktionszone (12) des Reaktors (1) durch einen umlaufenden Wandungsabschnitt (12a) des Reaktors (1) begrenzt ist, der eine der Reaktionszone (12) zugewandte Innenseite (12b) aufweist, die konusförmig ausgebildet ist, so dass sich die Reaktionszone (12) in vertikaler Richtung nach oben hin verjüngt.

9. Reaktor nach Anspruch 8, **dadurch gekennzeichnet, dass** die Innenseite einen Winkel (W) mit einem horizontalen Querschnitt der Reaktionszone (12) bildet, wobei der Winkel (W) vorzugsweise in einem Bereich von 85° bis 89,5°, bevorzugt 87° bis 89°, liegt.

10. Verfahren zur Durchführung einer endothermen Reaktion zur Gewinnung eines Produktgases (P) aus einem Einsatzgas (E) unter Verwendung eines Reaktors nach einem der vorhergehenden Ansprüche, wobei
- eine Vielzahl an Feststoffpartikeln (F) in die erste Wärmeintegrationszone (11) und von dort in die Reaktionszone (12) geführt wird,
- die Feststoffpartikel (F) in der Reaktionszone (12) erhitzt werden,
- die Feststoffpartikel (F) aus der Reaktionszone (12) in die zweite Wärmeintegrationszone (13) geführt werden und aus der zweiten Wärmeintegrationszone (13) abgezogen werden,
- das Einsatzgas (E) in die zweite Wärmeintegrationszone (13) und von dort in die Reaktionszone (12) eingeleitet wird, wobei das Einsatzgas (E) in der zweiten Wärmeintegrationszone (13) gegen aus der Reaktionszone (12) kommende Feststoffpartikel (F) erhitzt wird, wobei die Feststoffpartikel (F) abgekühlt werden, und wobei das Einsatzgas (E) in der Reaktionszone (12) mit den erhitzten Feststoffpartikeln (F) kontaktiert wird, wobei Wärme der erhitzten Feststoffpartikel (F) zum Erhitzen des Einsatzgases (E) in der Reaktionszone (12) auf das Einsatzgas (E) übertragen wird, wobei das Einsatzgas (E) in der Reaktionszone (12) als ein Edukt an der Reaktion unter Erzeugung des Produktgases (P) teilnimmt,
- das erzeugte Produktgas (P) aus der Reaktionszone (12) in die erste Wärmeintegrationszone (11) geführt wird, wobei die Feststoffpartikel (F) in der ersten Wärmeintegrationszone (11) gegen das aus der Reaktionszone (12) kommende Produktgas (P) vorgeheizt werden, wobei das Produktgas (P) abgekühlt wird, und wobei
- das Produktgas (P) aus der ersten Wärmeintegrationszone (11) abgezogen wird.

## Claims

1. A reactor (1) for performing an endothermic reaction, in particular high-temperature reaction, wherein a product gas (P) is obtained from an input gas (E), wherein the reactor (1) encompasses a reactor interior (10), wherein the reactor (1) is configured for providing a gravity-fed moving bed (120) comprising a multiplicity of solids particles (F) in a reaction zone (12) of the reactor interior (10) so that the reactor (1) comprises a solids particle inlet (30) by means of which solids particles (F) are introducible into a first heat integration zone (11) and the reactor (1) comprises a solids particle outlet (31) comprising a control element for the speed of motion by means of which the solids particles (F) are withdrawable from a second heat integration zone (13), wherein the reactor (1) is further configured for passing the input gas (E) into the reaction zone (12) so that the input gas (E) forms a countercurrent gas stream, wherein for heating the input gas (E) the reactor (1) is configured for heating the solids particles (F) in the reaction zone (12) by generating an electric current in the solids particles so that for heating the solids particles (F) of the reactor bed (120) the reactor (1) comprises a first and a second electrode (20, 21), wherein the first electrode (20) is arranged above the second electrode (21) in the reactor interior (10), so that by transfer of heat from the solids particles (F) to the input gas (E) the input gas (E) is heatable in the reaction zone (12) to a reaction temperature allowing it to take part as a reactant in the endothermic reaction to produce the product gas (P), and wherein the reactor interior (10) further comprises a first heat integration zone (11) in which heat from the product gas (P) produced in the reaction zone (12) is transferable to solids particles (F) of the reactor bed (120) to be passed into the reaction zone (12), and wherein the reactor interior (10) further comprises a second heat integration zone (13) in which heat from solids particles (F) of the reactor bed (120) exiting the reaction zone (12) is transferable to the input gas (E) for preheating the input gas (E) so that the reaction zone (12) is arranged between the two electrodes (20, 21), wherein the first heat integration zone (11) is arranged above the first electrode (20), and wherein the second heat integration zone (13) is arranged below the second electrode.

2. The reactor according to claim 1, wherein the two electrodes (20, 21) are in each case permeable to the solids particles (F), the input gas (E) and the product gas (P).

3. The reactor according to claim 1 or 2, wherein the reactor (1) is configured for providing a direct voltage (22) or an alternating voltage (22) between the two electrodes (20, 21) for heating the solids particles (F).

4. The reactor according to any of the preceding claims, wherein the reactor (1) comprises a solids particle inlet (30) by means of which solids particles (F) are introducible into the first heat integration zone (11) so that the solids particles (F) are conductible past the first electrode (20) into the reaction zone (12) and further conductible past the second electrode (21) into the second heat integration zone (13) and the solids particles are applied at the upper end of the reactor and withdrawn at the lower end of the reactor.

5. The reactor according to any of the preceding claims, wherein the control element for the speed of motion is a rotary airlock valve.

6. The reactor according to any of the preceding claims, wherein the reactor (1) comprises an input gas inlet (32) by means of which the input gas (E) is introducible into the second heat integration zone (13) and from there conductible past the second electrode (21) into the reaction zone (12) and the reactor comprises a product gas outlet (33) by means of which product gas (P) produced in the reaction zone (12) is withdrawable from the first heat integration zone (11).

7. The reactor according to any of the preceding claims, wherein the reactor (1) is configured for conducting the solids particles (F) in the first and/or the second heat integration zone (11, 13) under gravity feed in the form of a moving bed (110, 130).

8. The reactor according to any of the preceding claims, wherein the reaction zone (12) of the reactor (1) is delimited by a circumferential wall section (12a) of the reactor (1) which has an inner surface (12b) facing the reaction zone (12) which is conical so that the reaction zone (12) narrows upwardly in the vertical direction.

9. The reactor according to claim 8, wherein the inner surface forms an angle (W) with a horizontal cross section of the reaction zone (12), wherein the angle (W) is preferably in a range from 85° to 89.5°, preferably 87° to 89°.

10. A process for performing an endothermic reaction to obtain a product gas (P) from an input gas (E) using a reactor according to any of the preceding claims, wherein
- a multiplicity of solids particles (F) are passed into the first heat integration zone (11) and from there into the reaction zone (12),
- the solids particles (F) are heated in the reaction zone (12),
- the solids particles (F) are passed from the reaction zone (12) into the second heat integration zone (13) and are withdrawn from the second heat integration zone (13),
- the input gas (E) is introduced into the second heat integration zone (13) and from there introduced into the reaction zone (12), wherein the input gas (E) in the second heat integration zone (13) is heated against solids particles (F) exiting the reaction zone (12), wherein the solids particles (F) are cooled, and wherein the input gas (E) in the reaction zone (12) is contacted with the heated solids particles (F), wherein heat from the heated solids particles (F) is transferred to the input gas (E) to heat the input gas (E) in the reaction zone (12), wherein the input gas (E) in the reaction zone (12) takes part in the reaction as a reactant to produce the product gas (P),
- the produced product gas (P) is passed from the reaction zone (12) into the first heat integration zone (11), wherein the solids particles (F) in the first heat integration zone (11) are preheated against the product gas (P) exiting the reaction zone (12), wherein the product gas (P) is cooled, and wherein
- the product gas (P) is withdrawn from the first heat integration zone (11).

## Revendications

1. Réacteur (1) destiné à réaliser une réaction endothermique, en particulier une réaction à haute température, dans laquelle un gaz produit (P) est obtenu à partir d'un gaz de charge (E), le réacteur (1) entourant un espace intérieur de réacteur (10), le réacteur (1) étant configuré pour fournir, dans une zone de réaction (12) de l'espace intérieur de réacteur (10), un lit mobile (120) actionné par gravité possédant une pluralité de particules solides (F), de sorte que le réacteur (1) possède une entrée de particules solides (30) par le biais de laquelle des particules solides (F) peuvent être introduites dans une première zone d'intégration de chaleur (11), et le réacteur (1) possède une sortie de particules solides (31) avec un élément de commande de la vitesse de migration, par le biais de laquelle les particules solides (F) peuvent être extraites d'une deuxième zone d'intégration de chaleur (13), le réacteur (1) étant en outre configuré pour acheminer le gaz de charge (E) dans la zone de réaction (12) de telle sorte que le gaz de charge (E) forme un flux de gaz à contre-courant, le réacteur (1), en vue de chauffer le gaz de charge (E), étant configuré pour chauffer les particules solides (F) dans la zone de réaction (12) par la génération d'un courant électrique dans les particules solides, de sorte que le réacteur (1), en vue de chauffer les particules solides (F) du lit réacteur (120), possède une première et une deuxième électrode (20, 21), la première électrode (20) étant disposée au-dessus de la deuxième électrode (21) dans l'espace intérieur de réacteur (10), de sorte que le gaz de charge (E) dans la zone de réaction (12) peut être chauffé à une température de réaction par transfert de chaleur des particules solides (F) au gaz de charge (E), afin de participer en tant que produit de départ à la réaction endothermique en vue de générer le gaz produit (P), et l'espace intérieur de réacteur (10) possédant en outre une première zone d'intégration de chaleur (11) dans laquelle la chaleur du gaz produit (P) générée dans la zone de réaction (12) peut être transférée aux particules solides (F) du lit de réacteur (120) à guider dans la zone de réaction (12), et l'espace intérieur de réacteur (10) possédant en outre une deuxième zone d'intégration de chaleur (13) dans laquelle la chaleur des particules solides (F) du lit de réacteur (120) provenant de la zone de réaction (12) peut être transférée au gaz de charge (E) pour préchauffer le gaz de charge (E), de sorte que la zone de réaction (12) est disposée entre les deux électrodes (20, 21), la première zone d'intégration de chaleur (11) étant disposée au-dessus de la première électrode (20) et la deuxième zone d'intégration de chaleur (13) étant disposée au-dessous de la deuxième électrode.

2. Réacteur selon la revendication 1, **caractérisé en ce que** les deux électrodes (20, 21) sont chacune perméables aux particules solides (F), au gaz de charge (E) et au gaz produit (P).

3. Réacteur selon la revendication 1 ou 2, **caractérisé en ce que** le réacteur (1) est configuré pour, en vue de chauffer les particules solides (F), mettre à disposition une tension continue (22) ou une tension alternative (22) entre les deux électrodes (20, 21).

4. Réacteur selon l'une des revendications précédentes, **caractérisé en ce que** le réacteur (1) possède une entrée de particules solides (30), par l'intermédiaire de laquelle les particules solides (F) peuvent être introduites dans la première zone d'intégration de chaleur (11), de telle sorte que les particules solides (F) peuvent être guidées au-delà de la première électrode (20) dans la zone de réaction (12) et en outre au-delà de la deuxième électrode (21) dans la deuxième zone d'intégration de chaleur (13) et les particules solides sont délivrées à l'extrémité supérieure du réacteur et extraites à l'extrémité inférieure du réacteur..

5. Réacteur selon l'une des revendications précédentes, **caractérisé en ce que** l'élément de commande de la vitesse de migration est une vanne rotative.

6. Réacteur selon l'une des revendications précédentes, **caractérisé en ce que** le réacteur (1) possède une entrée de gaz de charge (32) par laquelle le gaz de charge (E) peut être introduit dans la deuxième zone d'intégration de chaleur (13) et, de là, peut être amené au-delà de la deuxième électrode (21) dans la zone de réaction (12) et le réacteur possède une sortie de gaz produit (33) par l'intermédiaire de laquelle le gaz produit (P) généré dans la zone de réaction (12) peut être extrait hors de la première zone d'intégration de chaleur (11).

7. Réacteur selon l'une des revendications précédentes, **caractérisé en ce que** le réacteur (1) est configuré pour guider les particules solides (F) dans la première et/ou la deuxième zone d'intégration de chaleur (11, 13) de manière entraînée par la gravité sous forme d'un lit mobile (110, 130).

8. Réacteur selon l'une des revendications précédentes, **caractérisé en ce que** la zone de réaction (12) du réacteur (1) est délimitée par une portion de paroi périphérique (12a) du réacteur (1), laquelle possède une face interne (12b) orientée vers la zone de réaction (12), qui est de configuration conique, de telle sorte que la zone de réaction (12) rétrécit dans la direction verticale vers le haut.

9. Réacteur selon la revendication 8, **caractérisé en ce que** la face interne forme un angle (W) avec une section transversale horizontale de la zone de réaction (12), l'angle (W) étant de préférence situé dans une plage de 85° à 89,5°, de préférence de 87° à 89°.

10. Procédé pour la réalisation d'une réaction endothermique destinée à obtenir un gaz produit (P) à partir d'un gaz de charge (E) à l'aide d'un réacteur selon l'une des revendications précédentes,
- une multitude de particules solides (F) étant guidées dans la première zone d'intégration de chaleur (11) et, à partir de là, dans la zone de réaction (12),
- les particules solides (F) étant chauffées dans la zone de réaction (12),
- les particules solides (F) étant guidées à partir de la zone de réaction (12) dans la deuxième zone d'intégration de chaleur (13) et soutirées de la deuxième zone d'intégration de chaleur (13),
- le gaz de charge (E) étant introduit dans la deuxième zone d'intégration de chaleur (13) et, à partir de là, dans la zone de réaction (12), le gaz de charge (E) étant chauffé dans la deuxième zone d'intégration de chaleur (13) à contre-courant par les particules solides (F) sortant de la zone de réaction (12), les particules solides (F) étant refroidies et le gaz de charge (E) étant mis en contact dans la zone de réaction (12) avec les particules solides (F) réchauffées, la chaleur des particules solides (F) réchauffées étant transférée, en vue de chauffer le gaz de charge (E), dans la zone de réaction (12) au gaz de charge (E), le gaz de charge (E) participant dans la zone de réaction (12) en tant que produit de départ à la réaction avec génération du gaz produit (P),
- le gaz produit (P) généré étant guidé à partir de la zone de réaction (12) dans la première zone d'intégration de chaleur (11), les particules solides (F) étant préchauffées dans la première zone d'intégration de chaleur (11) à contre-courant par le gaz produit (P) sortant de la zone de réaction (12), le gaz produit (P) étant refroidi et
- le gaz produit (P) étant soutiré de la première zone d'intégration de chaleur (11).
